# EUROPEAN PATENT APPLICATION

(11) **EP 4 614 396 A1**
(43) Date of publication of application: **10.09.2025**
(21) Application number: 24161802.4
(22) Date of filing: 06.03.2024
(51) Int. Cl.: G06N 5/022, G06N 7/06, G06N 20/00

(54) **METHOD AND SYSTEM FOR DEFINING A SEMANTIC FRAMEWORK FOR A PLURALITY OF DIGITAL ENTITIES IN A COMPUTER SIMULATED ENVIRONMENT**

(71) Applicant: Siemens Aktiengesellschaft, 80333 München (DE)
(72) Inventor: BANERJEE, Amar, 412207 Pune, Maharastra (IN); SHYAM SUNDER, Swathi, 560060 Bengaluru (IN)
(74) Representative: HKW Intellectual Property PartG mbB

(57) **Abstract**

An apparatus and method (200) for defining a semantic framework for a plurality of entities in a computer simulated environment. The method (200) includes receiving data from one or more data acquisition devices (104), translating, the data into one or more executable queries to extract data relating to the one or more elements from the knowledge database (106). The method (200) further includes assembling an entity model with one or more elements identified from the CNL data, each element operationalized using a model ontology and instantiating each element in the entity model using a plurality of instances for each element in the entity model to generate a semantic binding among the plurality of elements. Furthermore, the method (200) includes transforming the semantic binding into a knowledge graph using standard graph databases and translating the semantic description from the knowledge graph into an executable configuration for the metaverse.

## Description

The present invention relates generally to creating a semantic framework for a metaverse environment, and more specifically to a method and a system for defining a semantic framework for a plurality of digital entities or elements in a computer simulated environment.

### BACKGROUND

Digital twins serve as critical tools for replicating real-world plant operations, providing a virtual mirror of system components, and facilitating in-depth what-if scenario analysis. Despite their utility, the development of digital twins encounters challenges due to their often siloed construction, involving collaboration among domain experts, simulation specialists, and software engineers. Extracting implicit domain knowledge from experts becomes a time-consuming and labour-intensive task for engineers. Additionally, data modelling, a crucial step in digital twin creation, requires interaction between data modelers and domain experts. This manual and iterative process, tailored to domain constructs, adds complexity and time overhead. Each domain's simulation is unique, adhering to specific rules, axioms, and physics behaviours relevant to that domain. For instance, simulating a windmill power generator involves considerations of fluid dynamics, mechanics, magnetism, etc. The manual translation of domain knowledge and data models into executable code, along with labour-intensive visualization efforts, presents substantial challenges. Finally, digital twins typically focus on individual systems, complicating the integration of multiple digital twins. Compatibility issues arise from differences in domain models, underlying simulation technologies, and platforms.

In response to these challenges, the metaverse has emerged as a promising solution, acting as a global virtual platform that replicates real-world entities, behaviours, and environments closely. The metaverse accomplishes this by cloning real-world entities into a virtual platform, utilizing underlying hardware platforms. However, implementing a metaverse-based digital twin introduces its own set of challenges. Accurately representing the structure and behaviours of elements in a metaverse-based digital twin requires meticulous attention to ensuring fidelity to their real-world counterparts. Describing the environment in which elements are placed and articulating the interactions between elements and environments is essential for generating observable behaviours in the collective system. Converting detailed descriptions into functional metaverse models requires a seamless translation process to ensure accuracy and coherence. The final challenge involves deploying these metaverse models on platforms like Omniverse, necessitating compatibility and optimization considerations.

In light of the above, there remains a need for an improved and automated mechanism of generation of metaverse based digital twins to provide a coherent, efficient, and standardized process.

### SUMMARY

The present invention seeks to overcome the above-mentioned challenges by an automated semantic mechanism which reduces the manual effort of converting the knowledge graph of a metaverse and creating metaverse based digital twins. The automated semantic mechanism ensures that existing ontology is extended without forcing the end user to fully understand the whole ontology concepts.

The object of the present invention is achieved by a method for defining a semantic framework for a plurality of entities in a computer simulated environment. The method includes receiving, by a processing unit, controlled natural language (CNL) data from one or more data acquisition devices configured to acquire data pertaining to one or more elements required in a metaverse. The CNL data is acquired from one or more users. The method further includes translating controlled natural language (CNL) data into one or more executable queries to extract data relating to the one or more elements from a knowledge database. Furthermore, the method includes assembling an entity model with one or more elements identified from the CNL data, wherein each element is operationalized using a model ontology based on concepts from a real-world object ontology. The method further includes instantiating, each element in the entity model using a plurality of instances for each element in the entity model to generate a semantic binding among the one or more elements, wherein each instance represents a plurality of real world objects interacting in the metaverse. Therefore, the method results in transforming the semantic binding into a knowledge graph using standard graph databases, wherein the knowledge graph is a semantic description that describes underlying ontologies linking various concepts in form of a new ontology for the metaverse and thereby, generating an executable configuration of a computer simulated environment for the metaverse based on the semantic description from the knowledge graph. Advantageously, the method provides a translation mechanism to auto-convert semantic descriptions into models (simulation and surrogate) and finally, into the target deployment platform artefacts.

In one or more embodiments, the method further includes rendering a computer simulated environment for the metaverse based on the generated executable configuration and storing a generic metaverse model of the rendered metaverse in a knowledge database. This reduces the time and effort taken by the engineers to explication of the knowledge from subject-matter experts.

In one or more embodiments, the base ontology that captures a plurality of real-world objects and classifies description of each object into at least one of structure, behaviour, interactions, and environment. The structure includes a physical / topological frame of the object that allows the object to physically interact with the environment. The behaviour includes cause-effect behaviours of the objects that allows object to undergo structural, internal (logical) and topological changes. The interaction includes action protocols required by each object to engage the object in a session with other objects or environment, and the environment includes conditions required by an object to show the behaviour using the interactions. One of the advantages of the description of the interactions between elements and environments is that it gives rise to the observable behaviours of the collective system, thereby, reducing the interaction between data modelers and the domain experts, thereby reducing the errors arising from the manual understanding of the domain constructs and modelling the data. Additionally, this helps in making the process efficient and non-repetitive.

In one or more embodiments, the entity model operationalizes the descriptions of the real-world object by at least one of a plurality of entity models, wherein each of the plurality of entity models are a structure model, a simulation model or a machine learning based model. The operationalisation approach benefits by providing a semantic validation mechanism to validate the metaverse description against domain semantics or ontology.

In one or more embodiments, the model ontology categorizes the entity models into at least one of the three sub-types of entity models. The structure model is a visual graphic model, the structure model representing the entity model that visualizes the structure and interaction with a real-world object. The simulation model is created using a White Box Behaviour Model by applying the object description to simulation techniques, which when executed generate simulation data with respect to the object. The machine learning based model is a black box model configured to enable a low-time behaviour prediction using the machine learning techniques to learn such behaviour that predicts the behaviour of the real-world object in a new instance. The multiple model ontology helps in the interoperability, scalability and the adaptiveness of the sematic framework to accommodate emerging concepts and requirements.

In one or more embodiments, the knowledge graph is stored in a knowledge base, the knowledge base stored in the knowledge database. The stored knowledge-graph makes the objects scalable and re-usable for multiple environments.

In one or more embodiments, the knowledge graph is stored in the knowledge database such that platform-specific configuration details are stored separately from the domain knowledge. This benefits in the use of the same knowledge graph for different platform configuration and for multiple environments.

In one or more embodiments, the method utilizes the knowledge graph to generate a new metaverse platform based on a generic metaverse model and a target platform configuration acquired using a domain-specific language, and the generic metaverse model is a domain specific model that abstracts the metaverse concepts using the modelling vocabulary. Advantageously, the method ensures a high level of realism by providing accurate descriptions of elemental structures and behaviours, replicating their physical appearance and conduct in the real world in a precise manner.

In one or more embodiments, the generation of the new metaverse platform comprises capturing the target platform configuration in a form of one or more template, that maps one or more elements of the generic metaverse model, from the knowledge graph to the platform-based configuration syntax. The method further includes parsing the one or more template to identify the semantic mapping between the one or more elements of the generic metaverse model described in the one or more template. Furthermore, the method includes generating and executing a query associated with knowledge elements from the knowledge graph stored in the knowledge database using the identified semantic mapping. Additionally, the method includes of generating auto-configuration of the new metaverse platform by appending the result from the executed query with platform-based configuration syntax. Advantageously, this ensures that the method effectively supports a broad range of applications and facilitates the integration of data across different domains, creating a more comprehensive and interconnected virtual environment.

The object of the present invention is also achieved by an apparatus for defining a semantic framework for a plurality of elements in a computer simulated environment, the apparatus comprising one or more processing units, and a memory communicatively coupled to the one or mor processing units, the memory comprising a module stored in the form of machine-readable instructions executable by the one or more processing units, wherein the module is configured to perform steps of the aforementioned method.

The object of the present invention is also achieved by a system for efficiently rendering of one or more scenes in a computer simulated environment. The system includes at least one data acquisition device configured to receive controlled natural language (CNL) data from one or more users. The system also includes a processor, a knowledge database or a memory unit coupled to the processor, a distributed network (108) communicatively coupled to the computer simulated environment, and an apparatus communicatively coupled to the distributed network and the computer simulated environment, wherein the wherein the apparatus (110) is for defining a semantic framework for a plurality of elements in a computer simulated environment according to steps of the aforementioned method.

The object of the present invention is further achieved by a computer program code which, when executed by a processor, cause the processor to carry out steps of the aforementioned method.

The object of the present invention is further achieved by a computer program product comprising computer program code which, when executed by a processor, cause the processor to carry out steps of the aforementioned method.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details are modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
- FIG 1A: is a block diagram representation of a system defining a semantic framework for a plurality of entities in a computer simulated environment, in accordance with one or more embodiments of the present invention;
- FIG 1B: is a block diagram representation of an exemplary apparatus of the system described in FIG 1A, in accordance with one or more embodiments of the present invention;
- FIG 2: is a flowchart representation of a defining a semantic framework for a plurality of entities in a computer simulated environment, in accordance with one or more embodiments of the present invention;
- FIG 3: is an exemplary depiction a concept of a metaverse using the representation of connected graphs stored in a knowledge database, in accordance with one or more embodiments of the present invention;
- FIG 4: is an exemplary depiction of the knowledge creation workflows and the role of the user that create the knowledge, in accordance with one or more embodiments of the present invention;
- FIG 5: is an exemplary depiction of an architecture a semantic operational architecture to represent real world-objects into the metaverse, in accordance with one or more embodiments of the present invention; and
- FIG 6: is an exemplary depiction of a Metaverse Ontology, in accordance with one or more embodiments of the present invention.
- FIG 7: is an exemplary depiction of a first example of metaverse rendering based on a user input, in accordance with one or more embodiments of the present invention.
- FIG 8: is an exemplary depiction of a high level of workflow of translating the metaverse knowledge graph into executable metaverse-based platform configurations, in accordance with one or more embodiments of the present invention.
- FIG 9: is an exemplary depiction of an architecture for the semantic knowledge graph translator for metaverse, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It is evident that such embodiments may be practiced without these specific details.

Accordingly, embodiments of the proposed solution herein are achieved by a computer-implemented method for defining a semantic framework for a plurality of entities in a computer simulated environment. The processing unit receives CNL data related to various elements stored in a knowledge database and translates the CNL Data into executable queries. An entity model is then assembled, incorporating identified elements from the CNL data, each operationalized through a model ontology inheriting concepts from a real-world object ontology. Furthermore, the processing unit instantiates each element in the entity model using multiple instances for each element/environment, establishing a semantic binding among the elements. These instances represent actual objects designed for a target metaverse. The semantic binding is transformed into a knowledge graph using standard graph databases, providing a semantic description of the ontologies linking concepts. This knowledge graph serves as a foundation for a new ontology specifically tailored for the target metaverse. Therefore, the method utilizes the knowledge graph to generate a new metaverse platform based on a generic metaverse model and a target platform configuration captured using a domain-specific language. Finally, the processing unit translates the semantic description from the knowledge graph into an executable configuration for computer-simulated environments within the target metaverse. This innovation streamlines the integration of CNL data into virtual environments, enhancing the overall user experience in the metaverse.

Examples of a method, a system, and a computer-program product for defining a semantic framework for a plurality of entities are disclosed herein. In the following description, for the purposes of explanation, numerous specific details are set forth in order to provide a thorough understanding of the embodiments of the invention. It may be apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

Conventional methods and systems for metaverse creation creates new metaverse from scratch based on the information from the subject matter expert and simulation engineers. The that aids in the project creation exists in some cases, but there is a lack of standardized protocols and formats. Unlike the conventional methods and systems, the proposed solution provides a semantic abstraction to define objects, environments, behaviour models for elements in a metaverse ecosystem with reduced manual effort and reduced time. Further, unlike to the conventional methods and systems, the proposed solution enables ontologies to ensure type-based consistency and correctness in the description of the metaverse ecosystem. Thereby, achieving seamless interoperability between different metaverse. Furthermore, unlike the conventional methods and systems, the proposed solution enables a knowledge graph translation mechanism to translate the semantic descriptions into executable configuration for multiple metaverse platforms in a minimized time frame.

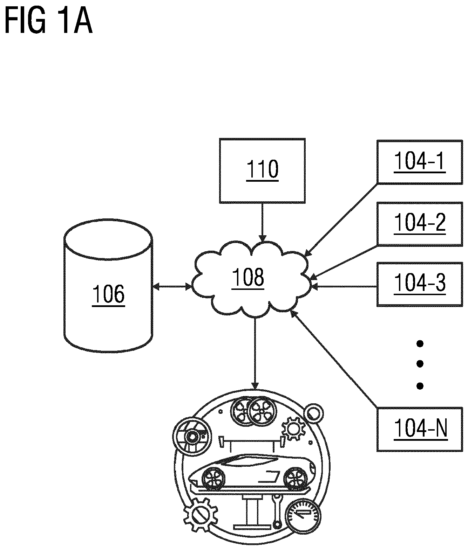

Referring to FIG 1A, illustrated is a block diagram of a system 100 for efficiently rendering of one or more scenes in a computer simulated environment, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

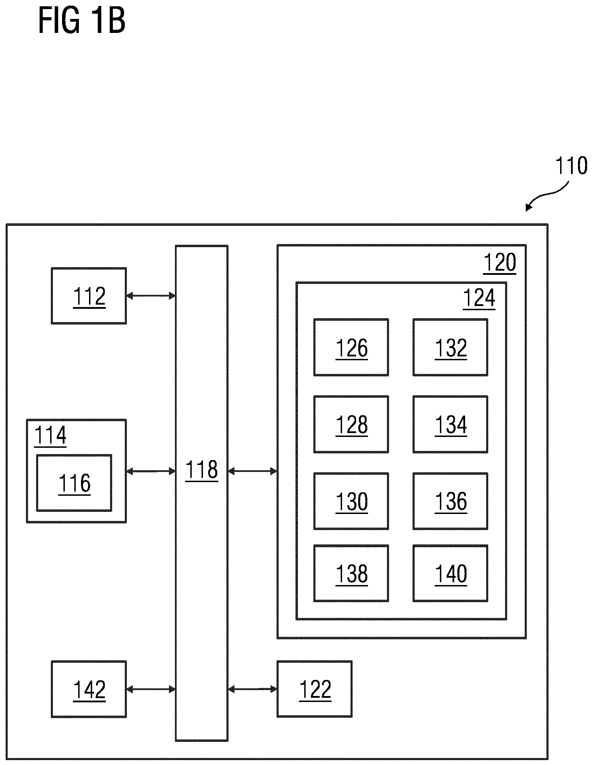

FIG 1 is a block diagram of a system 100 for efficiently rendering of one or more scenes in a computer simulated environment, according to an embodiment of the present invention. The system 100 comprises a computer simulated environment 102, one or more data acquisition devices 104-1 to 104-N, a knowledge database 106, and an apparatus 110 communicating over a network 108. The computer simulated environment 102 is virtual representation of a real or physical world. It can be understood as a virtual world representing one or more elements/entities of the real-world such as assets, machines, robots, operators, workers, operators, objects, etc. The computer-simulated environment 102 is accessible by a user, i.e., it is accessible from the real/physical world. In particular, the computer-simulated environment 102 can be understood as the "metaverse". It is also possible to interact with the computer-simulated environment 102, i.e., to influence or use processes, components and/or functions in the computer-simulated environment 102. The user or the avatar may interact with the objects rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more animated scenes being rendered corresponding to the plurality of entities interacting in the industrial environment. The metaverse may comprise a plurality of computer-simulated components. The computer simulated components can for example be understood as a representation, in particular a 3D or virtual representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

Throughout the present disclosure, the terms similar to "acquisition device" 104-1 and "one or more data acquisition devices" 104-1, 104-2, ... 104-N refers to any electronic device configured for capturing, acquiring, and transmitting data from a user to the apparatus. The acquisition device may take various forms depending on the specific application of the system 100. In an example, the acquisition device 104-1 includes one or more of a keyboard, a mouse, a touchscreen display, a microphone, a camera, or any other hardware component that enables the user to interact with the system 200. In another example, the acquisition device 104-1 may comprise of multiple modes of acquisition of the data in addition to a user input and therefore the acquisition devices 104-1, 104-2, ... 104-N may comprises of a combination of voice assistants, specialized input devices, data entry devices, touch screen interfaces, camera modules, digital cameras, surveillance cameras, aerial imaging devices, 3D imaging devices, wearable devices and the like. For the simplicity of this invention, we may refer to a single acquisition device 104-1.

Throughout the present disclosure, the term "knowledge database" (interchangeably used as "database") 106 refers to a knowledge database having metaverse ontologies, a plurality of generic metaverses, platform configuration and a preconfigured knowledge graphs derived from a knowledge graph repository comprising information pertaining to one or more real-world scenes. The knowledge base 106 may be a structured or non-structured collection of data or information stored in a computer-readable format. The knowledge base 106 comprises one or more tables, each consisting of rows and columns, where data is organized, stored, and managed. The data within the database can include text, numbers, images, audio, video, or any other form of electronic data. The knowledge base 106 is designed to efficiently store, retrieve, and manipulate large volumes of data, enabling rapid access and retrieval of information for various applications. It provides a centralized repository for organizing and managing data, facilitating data integrity, consistency, and security. The data within the knowledge base 106 can be accessed, modified, or queried through a database management system (DBMS), which provides a set of software tools and interfaces to interact with the database. The DBMS allows users or applications to perform operations such as inserting, updating, deleting, or searching for data within the knowledge base 106. The knowledge base 106 is a database which may be of various types, including but not limited to relational databases, NoSQL databases, distributed databases, in-memory databases.

Throughout the present the term "knowledge graph repository" refers to a data storage system designed to manage and organize structured data in the form of a knowledge graph. The repository comprises a collection of interconnected nodes and edges, where nodes represent entities or objects, and edges represent relationships or associations between these entities. The knowledge graph repository in the know is built to efficiently store, retrieve, and query large volumes of interconnected data, facilitating the representation and exploration of complex relationships and dependencies among entities. The repository is equipped with query and traversal capabilities that allow users or applications to perform operations such as searching, navigating, or reasoning over the interconnected data. It enables the retrieval of relevant information, inferencing of new relationships, and identification of patterns or insights within the knowledge graph. The knowledge graph repository in the knowledge database 106 may support various data models, including but not limited to property graph model, RDF (Resource Description Framework) model, hybrid models and so forth. In the context of the present invention, the knowledge graph repository stores the first knowledge graph developed based on the semantic binding and the knowledge graphs generated in all the next iterations.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 108, for example, the internet. The cloud computing environment provides on-demand network access to a shared pool of the configurable computing physical and logical resources. The network 108 is referred as a distributed network throughout the invention. The apparatus 110 may include a module for managing access control for a plurality of metaverses or digital twins interacting in a computer simulated collaborative environment over a distributed network.

Particularly, the system 100 comprises a cloud computing device configured for providing cloud services for managing access control for a plurality of data acquisition devices 104-1 to 104-N interacting in a computer simulated collaborative environment over a distributed network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

FIG 1B is a block diagram of an exemplary apparatus 110 for efficiently rendering one or more scenes in a computer simulated environment, according to an embodiment of the present invention. In an exemplary embodiment, the apparatus 110 is communicatively coupled, using a distributed network 108, to one or more data acquisition devices 104-1 to 104-N, the knowledge database 106, and the apparatus 110 to render the computer simulated environment 102.

The apparatus 110 may be a personal computer, a laptop computer, a tablet, a server, a virtual machine, and the like. The apparatus 110 includes a processing unit 112, a storage unit 114 comprising a database 116, a bus 118, a memory 120 comprising a module 124, an input unit 122, and an output unit 142.

The processing unit 112 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 112 may also include embedded controllers, such as generic or programmable logic devices or arrays, application specific integrated circuits, single-chip computers, and the like.

The storage unit 114 comprises the database 116 for storing a plurality of knowledge graphs. The storage unit 114 and/or database 116 may be provided using various types of storage technologies, such as solid-state drives, hard disk drives, flash memory, and may be stored in various formats, such as relational databases, non-relational databases, flat files, spreadsheets, and extended markup files, etc.

The memory 120 may be non-transitory volatile memory and/or non-volatile memory. The memory 120 may be coupled for communication with the processing unit 112, such as being a computer-readable storage medium. The processing unit 112 may execute instructions and/or code stored in the memory 120. A variety of computer-readable instructions may be stored in and accessed from the memory 120. The memory 120 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 120 includes the module 124 stored in the form of machine-readable instructions on any of the above-mentioned storage media and may be in communication to and executed by the processing unit 112. When the machine-readable instructions are executed by the processing unit 112, the module 124 causes the processing unit 112 to efficiently render one or more scenes in a computer simulated environment.

The module 124 further comprises a data acquisition module 126, a query generation module 128, an assembling module 130, a semantic binding generation module 132, a semantic graph transformation module 134, a configuration generation module 136, a semantic mapping module 138, and an auto configuration module 140.

The data acquisition module 126 is configured for acquiring input data from the user relating to an industrial environment. The data acquisition module 308 is configured for acquiring data pertaining to the one or more elements interacting in the industrial environment. The data acquisition module 126 is configured for acquiring data in one or more formats that may comprise controlled natural language (CNL) data. The data acquisition module 126 is configured for pre-processing of data received from the one or more data acquisition devices. The data acquisition module 126 is configured for acquiring CNL data from the data acquisition devices 104-1, 104-2,...104-N such as computers, laptops, smartphones, tablets, voice assistants, specialized input devices, data entry devices, touch screen interfaces, camera modules, digital cameras, surveillance cameras, aerial imaging devices, 3D imaging devices, wearable devices and the like.

The query generation module 128 is configured for generating a query based on the acquired input data. The query generation module 128 translates the CNL data from the user device into one or more executable queries based on the pre-defined conditions. Additionally, the query generation module 128 is configured for generating a query associated with knowledge graph elements from the knowledge graph stored in the knowledge database 206 using the semantic mapping. The query generation module 128 is configured for preprocessing the CNL data to optimize queries to enhance efficiency and reduce response times for better output. Further, the query generation module 128 may be configured to dynamically generate queries based on changing pre-defined conditions, user interactions, real-time data or a combination of both. The query generation module 128 is configured to incorporate error handling mechanisms to address situations where user input is ambiguous, incomplete, or incorrect.

The assembling module 130 is configured to assemble an entity model based on the CNL data. The assembling module 130 is configured to pre-processing of the entity model to operationalize each element in the entity model. The pre-processing may also involve specific operations or modifications to enhance the effectiveness or utility of the entity model. The operationalization of the elements in the entity models is based on a model ontology. The model ontology, here, refers to a set of rules or guidelines that define how the elements in the entity model should be operationalized. The model ontology is based on concepts from a real-world object ontology. Furthermore, the real-world ontology is a structured understanding of concepts and relationships between real world objects.

The semantic binding generation module 132 is configured to generate a semantic binding among the one or more elements interacting in the industrial environment. The semantic binding generation module 132 is configured to generate a plurality of instances for each element in the entity model. The instances represent the real-world objects that are intended to be present in the metaverse. The semantic binding generation module 132 is configured to processes the data relating to each element in the entity model is instantiated using a plurality of instances for each element in the entity model to generate a semantic binding among the one or more elements, wherein each instance represents a plurality of real-world objects interacting in the metaverse.

The semantic graph transformation module 134 is configured to process the generated semantic bindings generated using the semantic binding generation module 132 to generate a knowledge graph using standard graph databases. The nodes of the knowledge graph are one or more elements interacting in the industrial environment. The semantic bindings and the acquired data from the acquisition device 104-1 in combination determines the nodes and edges of the knowledge graph. The nodes and edges of the knowledge graph as identified based on entity extraction, attribute recognition, and relationship extraction models. Further, once the objects, entities, attributes, and relationships are identified, the semantic graph transformation module 134 is configured to construct a knowledge graph that represents the structured knowledge extracted from the scene. A knowledge graph is a graph-based representation that captures entities as nodes and relationships as edges, enabling efficient organization, querying, and retrieval of information. Further, the semantic graph transformation module 134 is configured to store the knowledge graph in the database 116.

In an embodiment of the invention, where there is a requirement of generating a new metaverse model based on a generic metaverse model, the configuration generation module 136 is configured to generate one or more template for the platform configuration. The configuration generation module 136 is configured to acquire a platform configuration and a generic metaverse model from the knowledge database 106. The platform configuration is captured in a form of one or more template using a domain-specific language. The generic metaverse model is a domain specific model that abstracts the metaverse concepts using the modelling vocabulary. The modeling vocabulary refers to a set of terms and concepts that are used in a specific domain or field to describe and represent entities, relationships, and processes within a model.

The semantic mapping module 138 is configured to map the one or more elements of the generic metaverse model from the knowledge graph stored in the knowledge database 116 to a platform-based configuration syntax. Additionally, the semantic mapping module 138 is configured to parse the one or more template to identify the semantic mapping between the one or more elements of the generic metaverse and each element described in the one or more template of the platform configuration.

The auto configuration module 140 is configured to generate executable configuration of a computer simulated environment for the metaverse based on the semantic description of the knowledge graph. The auto configuration module 140 is further configured to generate an auto-configuration of the new metaverse platform by appending the result based on the platform-based configuration syntax.

The processing unit 112 is configured for performing all the functionality of the module 116. The processing unit 112 is configured to receiving visual data from one or more data acquisition devices configured to acquire data pertaining to one or more entities interacting in an industrial environment. The processing unit 112 is configured to identify a real-world scene from the industrial environment in real-time. Herein, the real-world scene is identified using one or more machine learning models on the received visual data. The processing unit 112 is configured to fetch a preconfigured animated scene from a knowledge base based on a comparison with the identified real-world scene. Herein, the knowledge base comprises a plurality of preconfigured animated scenes derived from a knowledge graph repository comprising information pertaining to one or more real-world scenes in the industrial environment. The processing unit 112 is configured to render the preconfigured animated scene fetched from the knowledge base in the computer simulated environment. Herein, the rendered preconfigured animated scene is in synchronization with the identified real-world scene in real-time. The processing unit 112 is configured to detect a deviation in the real-world scene when compared with the preconfigured animated scene being rendered in the computer simulated environment. The processing unit 112 is configured to render the real-world scene in the computer simulated environment in response to the detected deviation.

The input unit 122 may provide ports to receive input from input devices such as keypad, touch-sensitive display, camera (such as a camera receiving gesture-based inputs), etc. capable of receiving set of requirements for generating scenes of a particular area in a factory floor, factory floor models details for storage in the first knowledge graph, worker behavior model details for storage in the second knowledge graph etc. The display unit 142 may provide ports to output data via output device with a graphical user interface for displaying one or more scenes in the computer simulated virtual environment. The bus 118 acts as interconnect between the processing unit 112, the storage unit 114, the memory 120, the input unit 122, and the display unit 142.

Those of ordinary skilled in the art will appreciate that the hardware depicted in FIG 1B may vary for implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

The present invention is not limited to a particular computer system platform, processing unit, operating system, or network. One or more aspects of the present invention is distributed among one or more computer systems, for example, servers configured to provide one or more services to one or more client computers, or to perform a complete task in a distributed system. For example, one or more aspects of the present invention is performed on a client-server system that includes components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

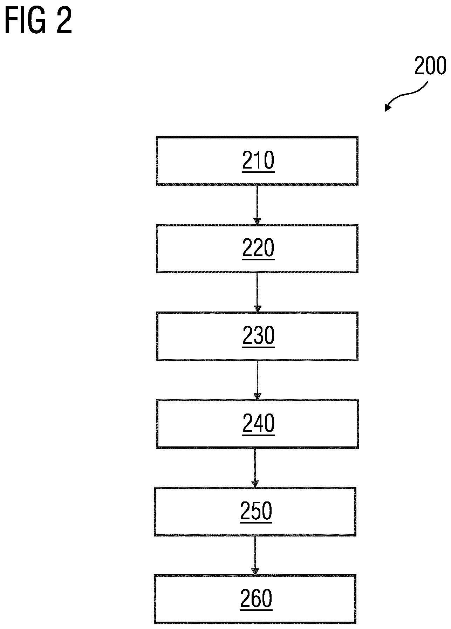

Referring now to FIG 2, illustrated is a flowchart of a method (as represented by reference numeral 200) for defining semantic framework for a plurality of entities in a computer simulated environment, in accordance with an embodiment of the present invention. As used herein, an entity like, for example but not limited to, a virtual or digital object, character, or item that exists within the virtual environment. This can also include avatars, objects, characters, non-player characters (NPCs), or any identifiable and interactive digital components. In the realm of user input procurement, the term "CNL data" pertains to structured information or data formatted using Controlled Natural Language (CNL). This controlled subset of natural language employs restricted vocabulary and grammar, contributing to reduced ambiguity and heightened precision in communication.

As used herein, Controlled Natural Language (CNL) data refers to data or information that is a structured and formatted data using Controlled Natural Language. In another example, the input of CNL data involves the structured presentation of instructions, queries, and prompts within user interfaces, forms, or systems. This approach aims to ensure a user-friendly experience while facilitating unambiguous data processing by automated systems. In another example, the CNL data is acquired as an input from conversational interfaces, chatbots, or virtual assistants, where natural language prompts framed in CNL assist in guiding user interactions. The CNL data, in this example, would be the entity data relating to a target metaverse that is desired by the user or a description of various real-world elements that needs to be replicated in a computer simulated environment.

As discussed, the present invention involves providing series of questions to users and acquiring the input to the questions. Based on the user input to the questions, the CNL data is converted to a query to extract data relating to the one or more elements from the knowledge database. Then, operationalizing and instantiating the elements in the form of various models. The proposed solution provides the generation of semantic binding between the various entities based on the instantiation of the elements. Further, the proposed solution also provides conversion of the semantic bindings into a knowledge graph to be converted into a computer simulated environment. Furthermore, the proposed solution stores the knowledge graph in a generic form to result in the reusable format of the knowledge graph and therefore, resulting in the generation of various computer simulated environments without the input for each element for each environment. As a result, when the proposed solution is implemented, the user will be able to save time by enabling a semantic operational architecture to systematically link real-world objects, to their various models and finally to bind these entities. This enhances the overall operational efficiency and speed of the project engineering.

Referring to FIGS 1A and 2 in combination, the various steps of the method 100 as described hereinafter are executed in the system 100, or specifically in the apparatus 110 of the system 100. It may be appreciated that although the method 200 is illustrated and described as a sequence of steps, it may be contemplated that various embodiments of the method 200 may be performed in any order or a combination and need not include all of the illustrated steps.

In embodiments of the present invention, at step 201, the method 200 includes receiving controlled natural language (CNL) data from one or more data acquisition devices configured to acquire data pertaining to one or more elements from a knowledge database. The CNL data is acquired from one or more users. In other examples, the data is received from the user in some other format similar to CNL, for example, but not limited to, Universal scene Description (USD) Data. This is achieved using, but not limited to, text input, voice Input, Structured Data Formats, API (Application Programming Interface) Calls, Web Forms, Document Uploads, custom protocols, or any similar form known to acquire CNL data. For example, the user describes an object car with a particular speed running over road. The description is analysed by the CNL processor and identify the different structures present in the CNL data.

In embodiments of the present invention, at step 202, the method 200 includes translating controlled natural language (CNL) data into one or more executable queries, to extract data relating to the one or more elements from the knowledge database.

In embodiments of the present invention, at step 203, the method 200 includes assembling an entity model with one or more elements identified from the CNL data. Each element is operationalized using a model ontology that inherits concepts from a real-world object ontology.

In embodiments of the present invention, at step 204, the method 200 includes instantiating each element in the entity model using a plurality of instances for each element or environment in the entity model to generate a semantic binding among the plurality of elements. Each instance represents a plurality of actual objects that are intended for a target metaverse. The instances include multiple examples relating to the elements in the entity model and, based on the previous events or the events previously, be stored in the knowledge database. An example of the instantiation of the objects as a metaverse configuration may be a road track of a road named as HighWay22, which has a car named SimRod with a car structure and a car speed as its attribute. Further, the car speed is defined as a data with a unit and an object like wind may affect the speed based on the wind speed. Furthermore, the racetrack may be defined as an environment that includes the road, car and the wind. The instantiation for this metaverse environment may be explained in controlled natural language based on the input training data as shown in the below mentioned.

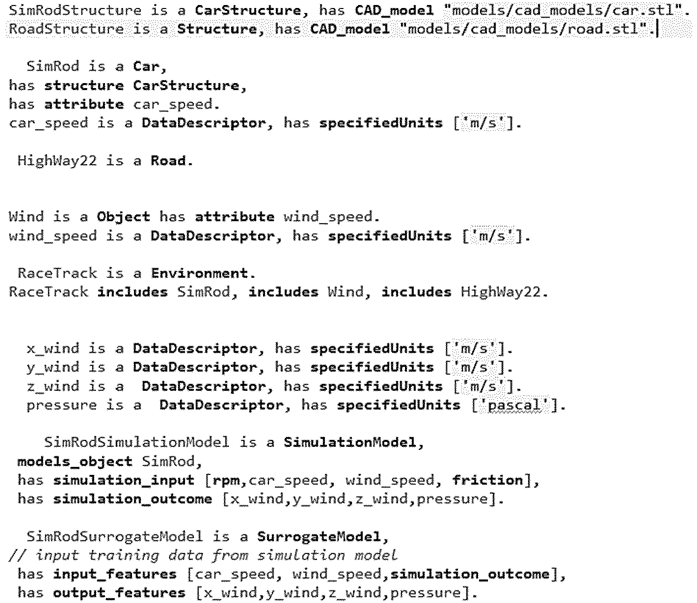

In embodiments of the present invention, at step 205, the method 200 includes transforming the semantic binding into a knowledge graph using standard graph databases. The knowledge graph is a semantic description that describes the underlying ontologies linking the various concepts in form of a new ontology for target metaverse. Here, the examples of the standard graph databases may be similar to Dgraph, Allegro graph, etc. that are available in the field. The knowledge-graph makes the objects scalable and re-usable for multiple metaverse environments. For example, a car object in the knowledge graph can be reused in a racetrack metaverse as well as a highway metaverse.

In embodiments of the present invention, at step 206, the method 200 includes translating, by the processing unit, the semantic description from the knowledge graph into an executable configuration of a computer simulated environments for the target metaverse. This may be achieved by converting these descriptions into suitable aspect domains. These aspect domains serve as execution environments that impart a metaverse aspect to the semantic descriptions. Various Metaverse Platforms serve as the execution environments providing human interaction with the objects and environments. An aspect layer serves as the interface converting the metaverse object knowledge graph into a configuration suitable for execution platforms. An aspect converter functions as a semantic translator, transforming the knowledge graph into a metaverse configuration. Here, the executable configuration of a computer simulated environment may be performed using multiple execution platforms available, for example but not limited to, Omniverse, Facebook-metaverse, Microsoft metaverse etc., that are aspects that provide a human interaction to the objects and environments. Therefore, the proposed solution provides improved mechanism of converting the semantic descriptions into a knowledge graph and then to the target metaverse. In the existing solution, new metaverse are created from scratch or fresh using semantic binding for each new metaverse.

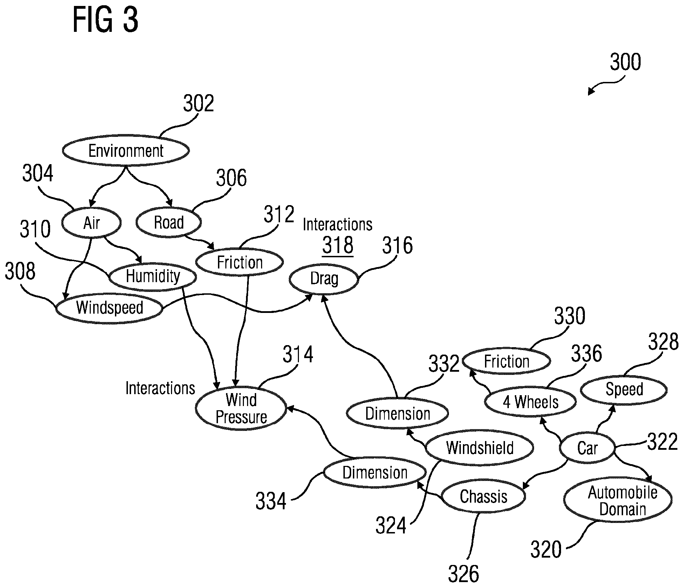

FIG 3 is an exemplary depiction of a concept of a metaverse using the representation of connected graphs stored in the knowledge database 106, in accordance with one or more embodiments of the present invention. The computer simulated environment, or the metaverse may be seen as a complex web/graph of elements interacting with each other and the environment. Multiple such graphs could be conceptualized to connect multi-metaverses. The vertices shown in the figure represent the actual physical elements / behavioural elements / attributes of the real-world interacting objects. While the edges represent the properties connecting these objects. For example, in a metaverse for a driving track would mimic the environment, road, and the car as in a real driving track to study the various what-if scenarios without actually being physically present on the track. The representation of interactions of the mentioned example is shown in FIG 3. Each node, (302, 304,306, 308, etc.) in such a graph can be seen as an element having its specific structure and behaviour. Each edge can be seen as an interaction (318) between the any two nodes. One node can have more than 1 edges i.e. each element can have more than one interaction. However, when it comes to describe the elements in the metaverse, it becomes difficult to describe the different structures, behaviour, environment, and their interactions consistently. Referring to the FIG 3, the knowledge database 106 includes multiple combinations created programmatically.

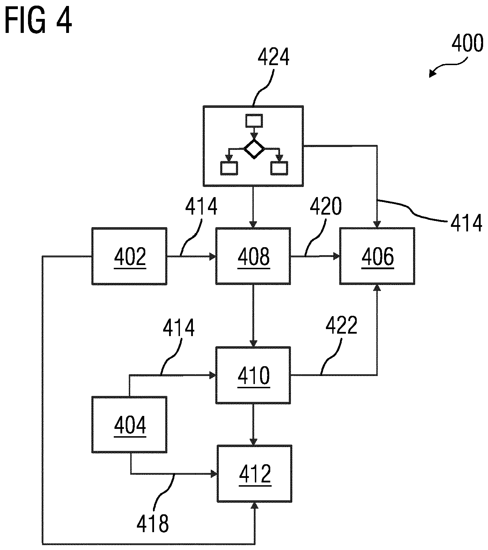

FIG 4 is an exemplary depiction of the knowledge creation workflows 400 and the role of the user that create the knowledge, in accordance with one or more embodiments of the present invention. Additionally, FIG 4 describes the steps to create knowledge for metaverse elements and store them in ontologies. The operational architecture, shown in in FIG 4, enables the users to create the knowledge graph. The approach begins by manually identification of real-world objects (Car, Road, Temperature, wind etc.) and describing them through a Controlled Natural Language using a base ontology for world objects by the user. The use of CNL makes describing the ontologies and finally the target environment closer to human cognition. The CNLs based approach helps extend existing ontology without forcing the end user to fully understand the whole ontology concepts unlike the ontological tools (e.g. protégé, etc.) that would make it overly complex to define hierarchical trees.

The knowledge creation workflow depicts metaverse upper ontology 424 that is stored in an ontology library 406. The subject matter expert (SME) 402 creates the domain knowledge 408 and the instance knowledge 412. The SME 402, in accordance with the present invention, may be an individual with in-depth knowledge and expertise in a specific domain relevant to the field pertinent to which the computer simulated environment, like metaverse, digital twin, Augmented Reality (AR), Virtual Reality (VR) or the like, the content or application is being developed. The SMEs 402 contribute their specialized knowledge to ensure the accuracy, realism, and authenticity of content within the metaverse. The domain knowledge 408 may refer to specialized knowledge and expertise in a specific field, industry, or subject area derived from metaverse upper ontology 424 or the subject matter expert 402. This may further include, but not limited to, industry-specific understanding, specialized terminology, problem-solving skills, experience-based insights, industry trends and innovations, contextual understanding, expert decision-making about the specific field, industry, or subject area.

The Simulation/Machine learning Engineer 404 creates behaviour knowledge 410 and instance knowledge 412. The simulation engineer/s 404 may be defined as an individual responsible for designing, developing, and optimizing the technical aspects of simulations within the metaverse. This may include creating the underlying systems, algorithms, and infrastructure that bring the virtual environment to life. Therefore, the simulation engineers 404 focus on the technical implementation of realistic behaviours, physics, graphics, and interactions within the virtual world. The behaviour knowledge 410 may be defined as an underlying technology that enables simulations to run smoothly and authentically. In accordance with the present invention, aspects such as graphics rendering, physics engines, artificial intelligence algorithms, networking, and other technical components necessary for a seamless and immersive metaverse experience may form a part of the behaviour knowledge 410. The behavior knowledge 410 and the domain knowledge 408 are reusable as they are stored in the ontology library 406.

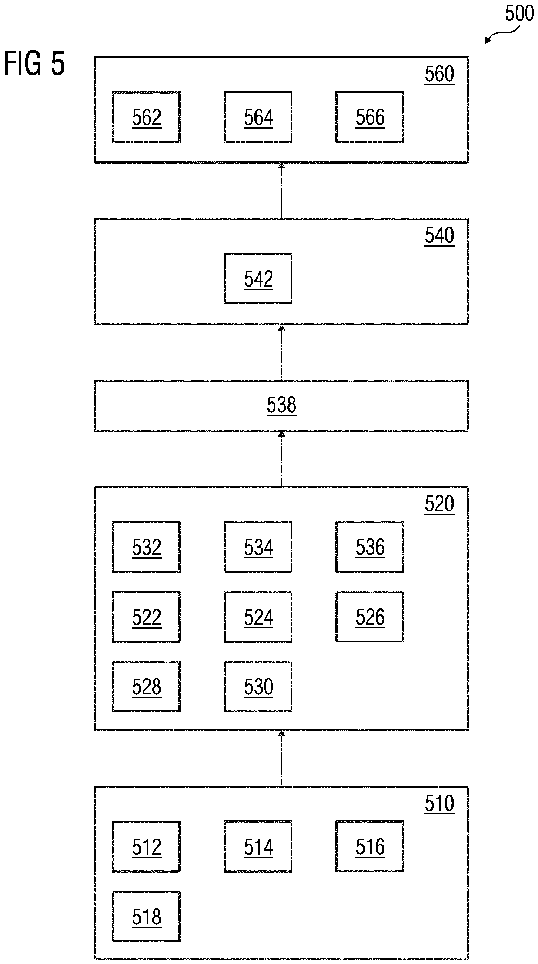

FIG 5 is an exemplary depiction of a semantic operational architecture 500 to represent real world-objects in the metaverse, in accordance with one or more embodiments of the present invention. The architecture comprises of multiple layers from the real-world layer 510 till the application layer 560. The real-world layer 510 comprises of a base-ontology capturing the real-world objects that are bucketed into four areas of the object description. The four areas maybe structure 512, behavior 514, interactions 516, and environment 518. The structure 512 may be described as a physical / topological frame of an object that allows the structure 512 to physically interact with the environment. For example, structure of a car may comprise of a chassis, wheels, doors, and their topology (arrangement). The behaviour 514 may be described as a cause-effect behaviours of the objects that allows the real-world objects to undergo one of structural, internal(logical) or topological changes. For example, a car stops when the brakes are applied. Therefore, the behavior of the car in response to the brakes may be defined under behavior. The interactions 516 may be action protocols required by the object to engage it in a session with other objects or environment. For example, to stop a car the following interaction 514 is required: -
i. Release accelerator
ii. Apply brake
iii. Press clutch
iv. Put car in neutral gear

The interactions 516 may be of different types, for example, but not limited to, User-to-User Interaction, User-to-Environment Interaction, Object Interactivity, Spatial Interactions etc. The Environment 518 may be defined as the conditions required by an object to show the described behavior using the described interactions. For example, a car needs a road, atmosphere, temperature range etc. to operate and demonstrate the described behavior. The environment may be of two types, an ideal environment, that is required for an object to demonstrate a desired result, and a real environment that may be the actual existing environment that object encounters in the real world. An example of an object description using Controlled Natural Language:

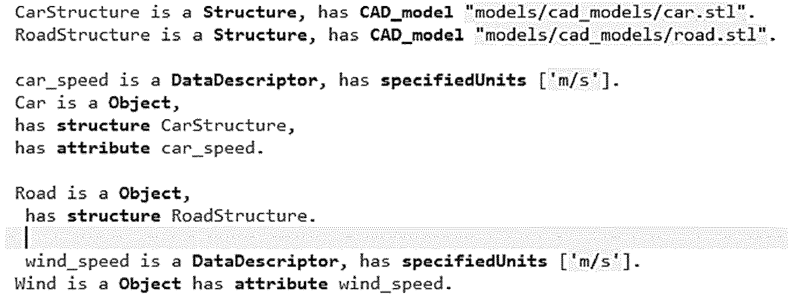

The second layer of the architecture is the model world layer 520. Following the description of the real-world entities through the utilization of a foundational ontology, the subsequent stage involves translating these descriptions into the realm of entity models. The operationalization of real-world object descriptions occurs within the entity models world, employing visual, simulation, or machine learning (ML) based models. Depicting the entity models world necessitates the utilization of a dedicated models ontology, which inherits fundamental concepts from the ontology governing real-world objects. Within the entity models ontology, models are systematically categorized into three distinct sub-types for objects. One of the three sub-types of the models is a structure and interaction model 522 or a Visual graphic model 524. The structure and interaction model 522 and VG model 524 represents a visualization of the structure and interaction with a real-world object. For example, a Computer-Aided Design (CAD) model of a car, a STL model of a road. An example of the description of VG model extending the base real-world model is shown below:

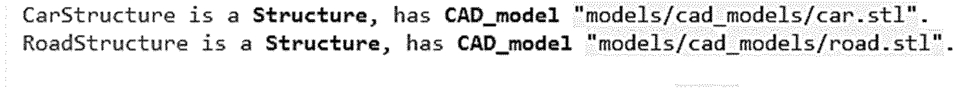

Another sub-type of model may be a semantics-based simulation model 526, for example, but not limited to, White Box Behaviour Model. A semantics-based simulation model or white box behaviour model 526 may create simulation models by applying the object/environment description to simulation techniques. The simulation models when executed generate simulation data with respect to the object/environment. For example, simulating a car model can generate data about the speed, windspeed, and drag. These data points might be described in a real-world object description of the car. The simulation model fills up the data points in the real-world object description. The simulation models are qualified as white box behaviour models 526, as there is complete explain ability regarding the model behaviours. Hence, the model behaviours can be adjusted with changes in the simulation configuration. An example of the of the semantics-based simulation model is shown below:

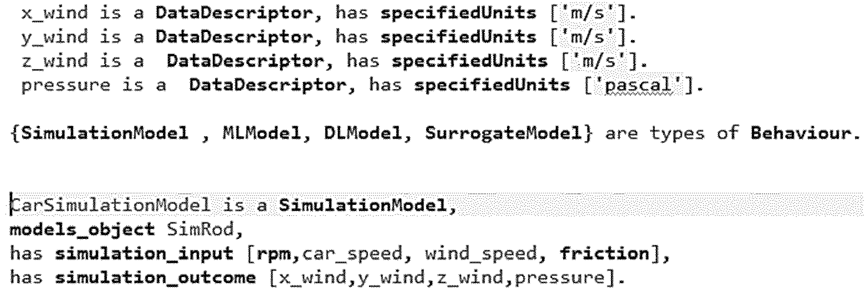

The third sub-type of models is a behavioural Artificial Intelligence (AI) model, like a Black Box Behaviour (B3) Model 528. There may be multiple types of B3 models, including, but not limited to, surrogate models 532, a deep learning model 534, or a machine learning model 536. This B3 model 528 serves to overcome limitations inherent in the simulation model by facilitating the prediction of low-time behaviours. While the simulation model may exhibit prolonged execution times in producing anticipated behaviors, the B3 model 528 introduces an avenue for efficient prediction. Leveraging Machine Learning (ML) techniques, this model learns behavior by training the ML approach with simulation data from prior runs. Consequently, a B3 model 528 is generated, offering predictive insights into the behavior of real-world objects. For instance, a B3 model may undergo training utilizing parameters such as the speed and windspeed of a car to forecast drag. The utilization of simulation-generated data in training B3 models enhances their predictive capabilities. The ensuing example illustrates a description of the B3 model:

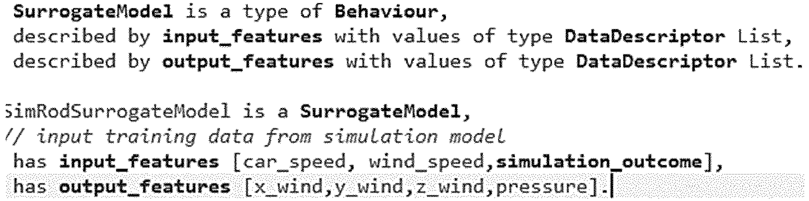

Here, after the generation of the several types of models, the next step may be the stitching of the real-world model explained in real world layer 510 and the physical models defined in the model world layer 520. This may be accomplished by generating the semantic bindings and forming the layer 538. Based on the data provided about the object in the real-world layer 510 and the model world layer 520, there is a generation of instances for each object of the models world layer. An example of the instantiation may be:

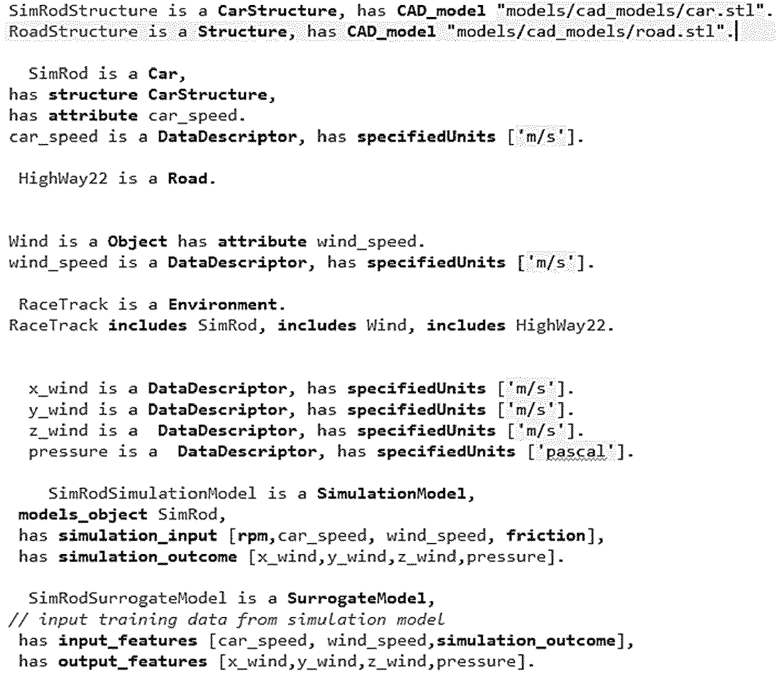

In other embodiments of the present invention, the descriptions of objects and their corresponding metaverse attributes, facilitated by semantic bindings, undergo transformation into a knowledge-graph utilizing standard graph databases. This knowledge-graph serves to render the objects scalable and reusable across multiple metaverse applications. For instance, an object such as a car within the knowledge-graph can be utilized interchangeably within distinct metaverse environments, such as racetrack and highway metaverses. In another example, the knowledge-graph may also serve to render the objects scalable and reusable across multiple execution environments or platform. The execution environments or platforms may be pre-existing mixed reality, cloud computing, virtual space, collaboration tools, or a combination thereof. Subsequently, upon describing instances for objects and the metaverse environment context, the process proceeds to translate these descriptions into suitable aspect domains 530. Aspect domains 530 herein referred to as execution environments, impart a metaverse aspect to the semantic descriptions. As depicted in FIG 5 of the accompanying architecture, the aspect domain 540 layer plays a pivotal role in the conversion of the metaverse object knowledge-graph into a metaverse configuration compatible with execution platforms. An aspect converter, functioning as a semantic translator, facilitates the translation of the knowledge graph into an executable configuration tailored for metaverse platforms 542. The metaverse platform may be utilized by a plurality of applications in an application layer 560. The application layer 560 may include several applications using the metaverse platform for example, but not limited to, a digital twin 562, an augmented reality environment 564 for trainings, a virtual environment 566 for collaborative, or like, that is required by the user.

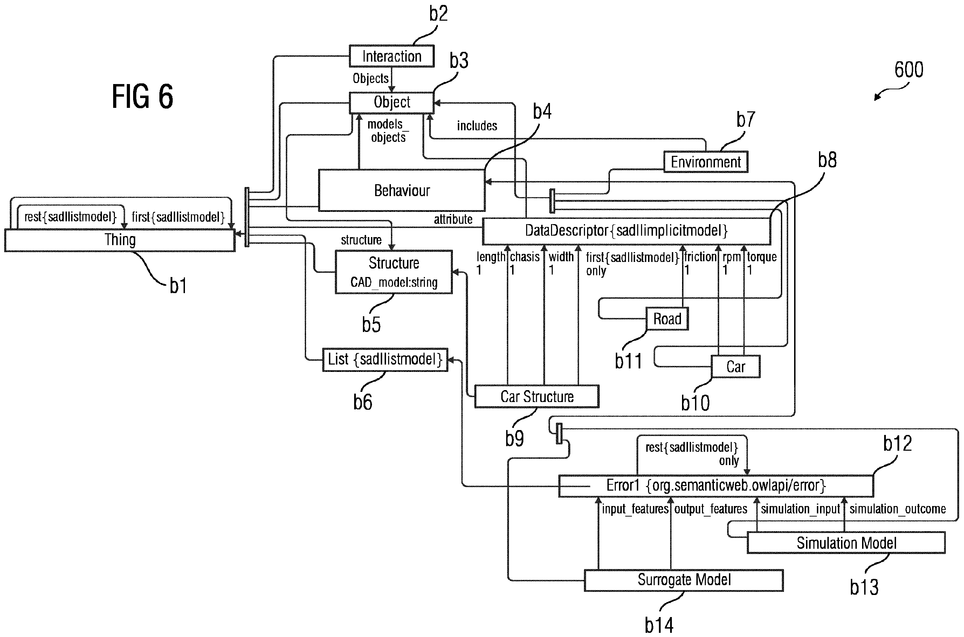

FIG 6 is an exemplary depiction of a Metaverse Ontology 600 stored in the knowledge database 106, in accordance with one or more embodiments of the present invention. The metaverse ontology is represented in the form of knowledge graphs consisting of nodes and edges. Each data descriptor is represented as a node in the knowledge graph. It encapsulates information such as an object, an interaction, a thing, a structure, an environment, a list, or a combination thereof. Edges define the connections or relationships between different data descriptors. These relationships signify how different entities are related to each other. Relationships between the different nodes is labelled to indicate the nature of the connection which includes interaction between the different nodes. The knowledge graph further includes attributes relating to the data descriptors. Similarly, different knowledge graphs may be categorized between different categories for the easy accessibility of the data relating to each node and, such that each node and edge may be utilized for a knowledge graph relating to a different metaverse environment. The metaverse ontology therefore provides extension mechanism to describe & extend real world objects (simulation or surrogate models) representing the behaviour of real-world entities in the metaverse.

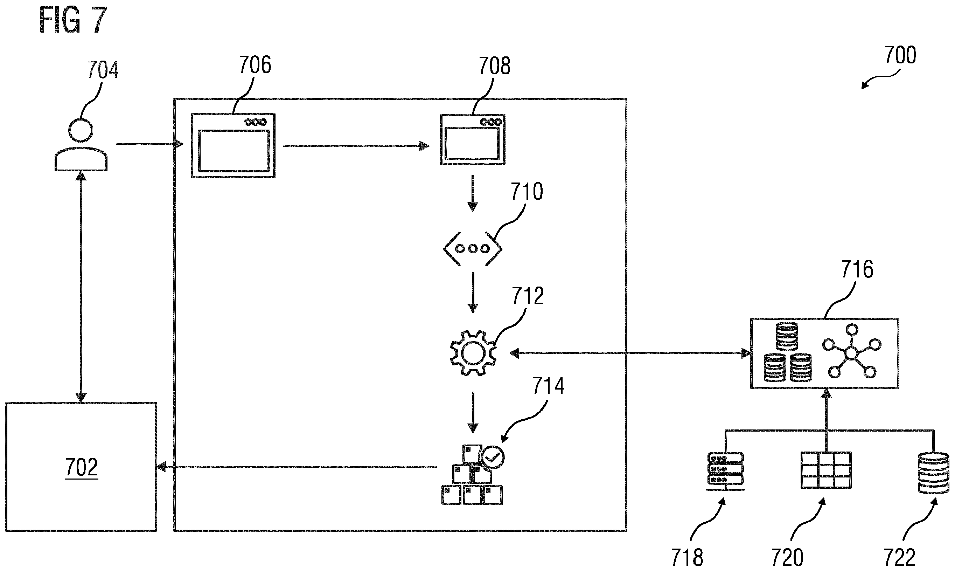

FIG 7 is an exemplary depiction 700 of a first example of metaverse rendering based on a user input. A high-level depiction is presented describing the utilization of a semantic translator for the translation of semantic descriptions into executable configurations conducive to Metaverse platforms. FIG 7 depicts an end user 704 interacts with CNL interface 706 to input the CNL data describing the metaverse elements. The CNL interface 606 is linked to a CNL interpreter 708 which generates a semantic query for example SPARQL query to be executed on a query executor 710. The query executor 712 receives the elements data from a knowledge graph which is stored in knowledge graph database 716 and executes the query on the received knowledge graph. The knowledge graph database 712 may comprise of multiple models data. One of the structure models 718 may be, for example, but not limited to, CAD, Computer-Aided Manufacturing (CAM), and Three-Dimensional (3D) models. Further the knowledge graph database 716 also comprises of simulation models 620 and session protocols 722 that is the interactions of the element. The knowledge graph is prepared based on the multiple model information. The query executor 712 receives a response in the form of elements data and assembles the metaverse scene 714. The metaverse scene is then displayed in a Universal Scene Description (USD) 702 format for a user to interact with.

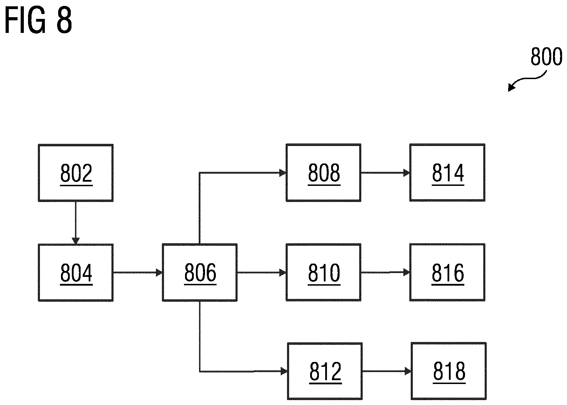

FIG 8 is an exemplary depiction of a high level of workflow of translating the metaverse knowledge graph 804 into executable metaverse-based platform configurations (814, 816, 818). The metaverse knowledge graph 804 is used to populate a generic metaverse model 806. The generic metaverse model 806 is domain specific model that abstracts the metaverse concepts using the modelling vocabulary. The model is then used to auto-generate metaverse-based platform configurations (814, 816, 818), via an intermediate platform template (808, 810, 812).

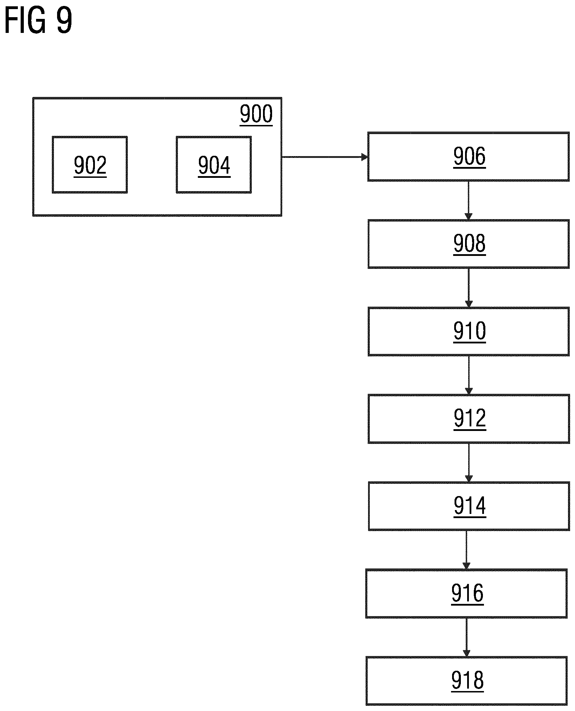

FIG 9 illustrates an exemplary depiction of an architecture for the semantic knowledge graph translator for metaverse. A knowledge graph translation template language 900 comprises of knowledge graph elements 902 and metaverse platform configuration syntax 904. A lexer/parser 906 parses the knowledge graph translation template 900. Then, an interpreter 908 identifies a type of the knowledge graph element into a class, a relation, an object etc. Thereafter, a query formulator 910 formulates a query to fetch instances for the identified elements. The formulated query is executed on the knowledge graph to fetch instances using a query executor 912. A results collector 914 gathers the query results and map them against the syntax elements. Then, a syntax assembler 916 appends the results with the syntax elements and a configuration generator 918 that generates configuration for the metaverse platform. The translation of the semantic knowledge graph into the executable aspect (Metaverse configuration) happens thru Algorithm 1, shown below:
Algorithm : Translate Knowledge graph into meta-verse configuration
INPUT: Template<KG Elements, Syntax Elements>: MAP
OUTPUT: Metaverse platform configuration: STRING
   1. INIT template= <KG Elements, Syntax Elements>, config=""
   2. FOR tuple<kg,synt > : template
      a. INIT duple<kg_element,type> = <kg,null>
      b. IF
         i. kg_element == class
            1. Type = class
         ii. kg_element == property
            1. Type = property
      c. ENDIF
      d. INIT query=getInstanceQuery(duple)
      e. INIT results = query.execute
      f. FOR result_element : results
         i. INIT str = Append(result_element, synt)
         ii. Append(config, str)
      g. ENDFOR
   3. ENDFOR
   4. RETURN config
   5. While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

The present invention discloses a system and method for facilitating semantic abstraction within a metaverse ecosystem to significantly enhance the capabilities of metaverse environments. Embodiments of the invention enable the definition of objects, environments, and behavior models for elements within the metaverse, providing a comprehensive semantic framework. Furthermore, the invention incorporates ontologies to ensure type-based consistency and correctness in describing the metaverse ecosystem. The use of a semantic operational architecture allows for the systematic linking of real-world objects to their structures, white-box, and black-box behavior, establishing a cohesive relationship among these entities. Additionally, a knowledge graph translation mechanism is disclosed, facilitating the translation of semantic descriptions into executable configurations suitable for diverse metaverse platforms and other analogous environments. One of the many advantages includes giving rise to the observable behavior of the collective system, reducing the interaction between data modelers and the domain experts, thereby reducing the errors arising from the manual understanding of the domain constructs and modelling the data. Additionally, this helps in making the process efficient, and non-repetitive. This innovative approach enhances the interoperability, scalability, and configurability of metaverse ecosystems, offering a versatile solution for efficient and consistent representation, interaction, and execution within virtual environments.

While the present invention has been described in detail with reference to certain embodiments, it should be appreciated that the present invention is not limited to those embodiments. In view of the present invention, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A computer-implemented method (200) for defining a semantic framework for a plurality of elements in a computer simulated environment, the method comprises:
receiving, by a processing unit (112), controlled natural language (CNL) data from one or more data acquisition devices (104) configured to acquire data pertaining to one or more elements required in a metaverse, wherein the CNL data is acquired from one or more users;
translating, by the processing unit (112), CNL data into one or more executable queries, to extract element data relating to the one or more elements stored in a knowledge database (106);
assembling, by the processing unit (112), an entity model with one or more elements identified from the CNL data, wherein each element is operationalized using a model ontology based on concepts from a real-world object ontology;
instantiating, by the processing unit (112), each element in the entity model using a plurality of instances for each element in the entity model to generate a semantic binding among the one or more elements, wherein each instance represents a plurality of real-world objects interacting in the metaverse;
transforming, by the processing unit (112), the semantic binding into a knowledge graph using standard graph databases, wherein the knowledge graph is a semantic description that describes underlying ontologies linking various concepts in form of a new ontology for the metaverse; and
generating, by the processing unit (112), an executable configuration of a computer simulated environment for the metaverse based on the semantic description from the knowledge graph.

2. The method (200) according to claim 1, the method further comprising:
rendering, by the processing unit (112), a computer simulated environment for the metaverse based on the generated executable configuration; and
storing, by the processing unit (112), a generic metaverse model of the rendered metaverse in the knowledge database (106).

3. The method (200) according to any of the claims 1 to 2, wherein the base ontology comprises:
the plurality of real-world objects and corresponding descriptions of each real-world object classified into at least one of structure, behaviour, interactions, and environment, and wherein:
the structure includes at least one of a physical frame or topological frame of the object allows the object to physically interact with the environment;
the behaviour includes cause-effect behaviours of the objects that allows the object to undergo structural, internal, and topological changes;
the interaction includes action protocols required by each object to engage the object in a session with other objects or environment; and
the environment includes conditions required by an object to show the behaviour using the interactions.

4. The method (200) according to claims 1 and 3, wherein
the entity model operationalizes the descriptions of the real-world objects by at least one of a plurality of entity models; and
each of the plurality of entity models is at least one of a structure model, a simulation model, or a machine learning based model.

5. The method (200) according to claims 3 and 4, wherein the model ontology categorizes the entity models into at least one of the three sub-types of entity models.

6. The method (200) according to claims 3 and 4, wherein the structure model is a visual graphic model, the structure model representing the entity model that visualizes the structure and interaction with a real-world object.

7. The method (200) according to claims 4 and 5, wherein the simulation model is created using a White Box Behaviour Model by applying the object description to simulation techniques, which when executed generate simulation data with respect to the object.

8. The method (200) according to claims 4 and 5, wherein the machine learning based model is a black box model configured to enable a low-time behaviour prediction using the machine learning techniques to learn such behaviour that predicts the behaviour of the real-world object in a new instance.

9. The method (200) according to any of the claims 1 to 8, wherein the knowledge graph is stored in a knowledge graph repository in the knowledge database (106).

10. The method (200) according to claims 1 and 9, wherein the knowledge graph is stored in the knowledge database (106) such that platform specific configuration details are stored separately from the domain knowledge.

11. The method (200) according to claims 9 and 10, wherein the stored knowledge graph is utilized to generate a new metaverse platform based on the generic metaverse model and a platform configuration, wherein
the platform configuration is acquired from the knowledge database using a domain-specific language; and
the generic metaverse model is a domain specific model that abstracts the metaverse concepts using the modelling vocabulary.

12. The method (200) according to claims 10 and 11, wherein the generation of the new metaverse platform comprises:
capturing, by the processing unit (112), the platform configuration in a form of one or more template, which maps one or more elements of the generic metaverse model, from the knowledge graph to a platform-based configuration syntax;
parsing, by the processing unit (112), the one or more template to identify the semantic mapping between the one or more elements of the generic metaverse model and each element described in the one or more template;
generating and executing, by the processing unit (112), a query associated with knowledge graph elements from the knowledge graph stored in the knowledge database using the identified semantic mapping; and
generating, by the processing unit (112), auto-configuration of the new metaverse platform by appending the result from the executed query with the platform-based configuration syntax.

13. An apparatus (110) for defining a semantic framework for a plurality of elements in a computer simulated environment, the apparatus comprising:
one or more processing units (112); and
a memory (120) communicatively coupled to the one or more processing units (112), the memory (120) comprising a module (124) stored in the form of machine-readable instructions executable by the one or more processing units (112), wherein the module is configured to perform the method (200) steps according to claims 1 to 12.

14. A system (100) for efficiently rendering of one or more scenes in a computer simulated environment, the system comprising:
one or more data acquisition devices (104-1 to 104-N),
a knowledge database (106);
a distributed network (108) communicatively coupled to the computer simulated collaborative environment; and
an apparatus (110) according to claim 13, communicatively coupled to the distributed network (108) and the computer simulated environment (102), wherein the apparatus (110) is for defining a semantic framework for a plurality of elements in a computer simulated environment, according to any of the method claims 1 to 12.

15. A computer program product, comprising computer program code which, when executed by a processor, cause the processor to carry out the method of any one of the claims 1 to 12.

16. A computer-readable medium comprising a computer program product comprising computer program code which, when executed by a processor, cause the processor to carry out the method of any one of the claims 1 to 12.
